# EUROPÄISCHE PATENTSCHRIFT

(11) **EP 3 578 242 B1**
(45) Veröffentlichungstag und Bekanntmachung des Hinweises auf die Patenterteilung: **07.07.2021**
(21) Anmeldenummer: 18175993.7
(22) Anmeldetag: 05.06.2018
(51) Int. Cl.: B01D 33/067, B01D 33/09, B01D 33/74

(54) **VAKUUM- UND/ODER DRUCK-FILTRATIONSVORRICHTUNG ZUM FILTERN EINER SUSPENSION**
VACUUM AND/OR PRESSURE FILTRATION DEVICE FOR FILTERING A SUSPENSION
DISPOSITIF DE FILTRATION SOUS VIDE ET/OU SOUS PRESSION PERMETTANT DE FILTRER UNE SUSPENSION

(43) Veröffentlichungstag der Anmeldung: 11.12.2019
(73) Patentinhaber: ANDRITZ Separation GmbH, 51149 Köln (DE)
(72) Erfinder: KNOBLOCH, Wolfgang, 82327 Tutzing (DE); SCHERER, Dieter, 85276 Pfaffenhofen (DE)
(74) Vertreter: Viering, Jentschura & Partner mbB Patent- und Rechtsanwälte

(56) Entgegenhaltungen:
- EP-A1- 2 468 379
- DE-B- 1 177 614
- US-A- 3 363 774
- US-A- 5 281 343

## Beschreibung

Die Erfindung betrifft eine Vakuum- und/oder Druck-Filtrationsvorrichtung zum Filtern einer Suspension, welche Feststoff und Flüssigkeit umfasst.

Bei Vakuum- und/oder Druck-Filtrationsvorrichtungen werden zum Beispiel Multifilterzellen-Filtertrommeln verwendet, wobei die rings des Umfangs der Filtertrommel angeordneten Filterzellen in der Regel an eine Innen- oder Außenverrohrung angeschlossen sind, bei der an eine jeweilige Filterzelle ein jeweils zugeordnetes Filtrat-Abführrohr angeschlossen ist, über welches das Filtrat abgeführt wird. Solche Vakuum- und/oder Druck-Filtrationsvorrichtungen sind zum Beispiel aus der US 3,630,380 und der US 3,363,774 bekannt.

Aus der US 5 281 343 A ist ein Vakuum-Filtrationssystem zum Filtern von gelösten Feststoffen aus einem flüssigen Filtrat in einer flüssigen Suspension bekannt.

Aus der DE 11 77 614 B ist ein geschlossenes zylindrisches Druckdrehfilter bekannt.

Aus der EP 2 468 379 A ist eine Filtervorrichtung zum Ausfiltern von Feststoff aus einem Feststoff-Flüssigkeit-Gemisch bekannt.

Durch die Erfindung wird eine Vakuum- und/oder Druck-Filtrationsvorrichtung zum Filtern einer Suspension, welche Feststoff und Flüssigkeit umfasst, geschaffen, bei welcher eine Multifilterzellen-Filtertrommel herangezogen wird, wobei eine verbesserte Filtrat-Abführung bei einfachem Aufbau erzielt ist.

Hierzu stellt die Erfindung bereit eine Vakuum- und/oder Druck-Filtrationsvorrichtung zum Filtern einer Suspension, welche Feststoff und Flüssigkeit umfasst, mit einer Filtertrommel, wobei die Filtertrommel eine Trommelachse (z.B. Trommellängsachse) definiert, um die Trommelachse drehbar gelagert ist, einen Außenmantel aufweist, (der z.B. zylindrisch ausgebildet ist und) von welchem eine Mehrzahl von Filterzellen ausgebildet sind, die sich längs der Trommelachse erstrecken, die rings der Trommelachse zueinander benachbart angeordnet sind und die an ihrer Außenseite mit einem Filtermedium versehen sind, einen Innenmantel aufweist, der zu dem Außenmantel benachbart angeordnet ist, der eine Innenmantel-Außenfläche hat, welche die Filterzellen radial innen begrenzt, sodass von der Innenmantel-Außenfläche eine Mehrzahl von Ablaufflächen gebildet wird, auf welchen die Flüssigkeit, die beim Filtern der Suspension durch das jeweilige Filtermedium passiert, als Filtrat ablaufen kann, und der entlang der Trommelachse zumindest zu einer ersten Trommelstirnseite der Filtertrommel hin konisch verjüngt ausgebildet ist, sodass die jeweilige Ablauffläche korrespondierend zumindest in Richtung zu der ersten Trommelstirnseite der Filtertrommel hin radial nach innen geneigt verläuft, und eine erste trommelstirnseitige Platte (z.B. in Form einer Ringplatte) aufweist, in welcher eine Mehrzahl von den Filterzellen jeweils zugeordneten Abführkanälen zum Abführen des Filtrats (z.B. integral, z.B. integral abgekapselt) ausgebildet ist, wobei die jeweilige Ablauffläche mit einem jeweils Zugeordneten der Abführkanäle fluidverbunden ist, wobei die erste trommelstirnseitige Platte entlang ihres Außenumfangs mit einer Mehrzahl von Ausnehmungen (z.B. von Umfangsstirn-Ausnehmungen, d.h. von in die Umfangsstirnseite der ersten trommelstirnseitigen Platte eingebrachten Ausnehmungen) versehen ist, die den Abführkanälen jeweils zugeordnet sind und die einen Zulauf des jeweils zugeordneten Abführkanals bilden, in welchen (Zulauf) die jeweils zugeordnete Ablauffläche ausmündet (z.B. unmittelbar ausmündet) und der zu dem Abführkanal hin verjüngt ausgebildet ist, sodass der jeweilige Abführkanal an der radial innersten Stelle der zugeordneten Ausnehmung an diese angeschlossen ist.

Mittels der konischen Form des Innenmantels in Kombination mit den in der ersten trommelstirnseitigen Platte ausgebildeten Abführkanälen und den entlang des Außenumfangs umfangsstirnseitig in die erste trommelstirnseitige Platte eingebrachten (z.B. eingeprägten) Ausnehmungen kann eine verbesserte Filtrat-Abführung mit z.B. entsprechendem verringertem Druckverlust erzielt werden, wobei die Innenmantel-Außenfläche entlang der Trommelachse glatt ausgebildet sein kann (wodurch der Strömungswiderstand verringert ist), und wobei größere Strömungsumlenkungen und enge Kanalströmung nur entlang eines relativ kurzen Stücks an/in der ersten trommelstirnseitigen Platte auftreten. Ferner kann die erfindungsgemäße Vorrichtung in einfacher Weise ohne Verrohrung implementiert werden.

Zwischen den Filterzellen sind zum Beispiel langgestreckte Trennleisten, z.B. Halteleisten, die z.B. als Klemmleisten ausgebildet sind, angeordnet, welche die Filterzellen in Umfangsrichtung der Filtertrommel voneinander trennen und welche sich längs der Trommelachse erstrecken und mittels deren z.B. das jeweilige Filtermedium, das einer jeweiligen Filterzelle zugeordnet ist, an der Filtertrommel festgelegt ist, z.B. via Klemmen festgelegt ist. Die Filterzellen und damit deren jeweils zugeordnete Ablauffläche erstrecken sich z.B. fast komplett entlang der gesamten Länge der Filtertrommel entlang deren Trommellängsachse. Gleiches gilt entsprechend für die Trennleisten und die Filtermedien.

In Richtung der Trommelachse gesehen kann zum Beispiel die radial innerste Stelle jeder Ausnehmung bezüglich einer Umfangsmitte eines äußeren Umfangsabschnitts der jeweiligen Filterzelle (z.B. der jeweiligen Ausnehmung) in eine (bzw. die im Filterbetrieb vorgesehene) Drehrichtung der Filtertrommel versetzt angeordnet sein. Dies kann einen Vorteil dahingehend haben, dass im Bereich kurz vor dem Eintauchen des in (Trommel-)Drehrichtung (um die Trommelachse) vorlaufenden Trommelabschnitts, in welchem (Bereich) z.B. ein Abblasen eines auf dem Filtermedium vorliegenden Filterkuchens durch Zuführung von Druckluft durch den Abführkanal in Richtung von (radial) innen zu dem Trommelaußenmantel und dem auf dessen Filtermedium aufliegenden Filterkuchen hin stattfindet, in der Ausnehmung mit höherer Sicherheit weniger Restfeuchte erreicht werden kann, welche andernfalls durch die Druckluft wieder dem Filterkuchen zugeführt würde.

Wie aus den nachfolgenden Weiterbildungen ersichtlich ist, kann die erfindungsgemäße Vorrichtung auch dahingehend von Vorteil sein, dass sie in einfacher Weise in Verbundbauweise erstellbar ist, was hinsichtlich ihrer Korrosionsfestigkeit und damit ihrer Haltbarkeit von Vorteil sein kann.

Die erste trommelstirnseitige Platte kann z.B. eine erste, lasttragende, innere (z.B. axial gesehen innere) Stütz-Platte, welche z.B. in Form einer Stütz-Ringplatte ausgebildet ist, und eine äußere (z.B. axial gesehen äußere) Funktions-Platte (wobei "innen" und "außen" jeweils auf die Filtertrommel bezogen sind) aufweisen, welche von der ersten Stütz-Platte gestützt wird und in welcher die Abführkanäle und die Ausnehmungen isoliert von der ersten Stütz-Platte ausgebildet sind. Dies erlaubt es zum Beispiel, ein von einer Antriebswelle in die Filtertrommel eingehendes Drehmoment über die erste Stütz-Platte aufzunehmen, so dass die Funktions-Platte lediglich im Hinblick auf ihre Funktion zur Abführung von Filtrat, Zuführung von Druckluft, Anlegen von Vakuum (zum z.B. Absaugen von Filtrat) gestaltet werden kann, wobei für die Funktions-Platte keine lasttragende Eigenschaften zu berücksichtigen sind.

Entsprechend kann zum Beispiel der Innenmantel einen lasttragenden, inneren Stützmantel und einen äußeren Funktionsmantel aufweisen, welcher von dem Stützmantel gestützt wird und von welchem die Innenmantel-Außenfläche in einer von dem Stützmantel isolierten Weise gebildet wird.

Der Stützmantel und die erste Stütz-Platte können zum Beispiel starr miteinander verbunden sein (z.B. unter Ausbildung einer lasttragenden Verbindung), wobei der Stützmantel, die erste Stütz-Platte, die äußere Funktions-Platte und der Funktionsmantel derart angeordnet und eingerichtet sind, dass der Stützmantel und die erste Stütz-Platte sowohl von den Ausnehmungen als auch von der Innenmantel-Außenfläche isoliert sind. Isoliert bedeutet in dieser Anmeldung z.B. fluidisoliert, d.h. in diesem Falle, dass die erste Stütz-Platte und der Stützmantel damit vor einer Berührung bzw. einem Kontakt mit dem Filtrat isoliert/abgekapselt sind. Dies erlaubt es, den Stützmantel und die erste Stütz-Platte aus einem Material, z.B. einem Metallmaterial herzustellen, das nicht gegen das Filtrat korrosionsbeständig sein muss und das zum Beispiel vor allem im Hinblick auf die erforderliche Festigkeit ausgewählt ist. Hierbei wird der Stützmantel von dem darauf angeordneten Funktionsmantel gegen Berührung mit dem auf dessen Außenfläche (= Innenmantel-Außenfläche) ablaufenden Filtrat isoliert, und die Abführkanäle und die Ausnehmungen können z.B. von der ersten Stütz-Platte abgekapselt in der Funktions-Platte ausgebildet sein, wobei der Funktionsmantel z.B. die Ausnehmungen überlappt und dicht gegen die Funktions-Platte abschließt, sodass auch im Bereich des Übergangs zwischen jeweiliger Ablauffläche und Ausnehmung kein Zugang für das Filtrat zu der ersten Stütz-Platte und dem Stützmantel gegeben ist.

Ferner sind z.B. Ausgangsanschlüsse (z.B. axial aus der ersten trommelstirnseitigen Platte ausmündende Ausgangsanschlüsse) der Abführkanäle in einem radial inneren Abschnitt der Funktions-Platte (in z.B. integraler Weise, z.B. integral abgekapselter Weise) ausgebildet. Solche Ausgangsanschlüsse sind z.B. mit einem an der Filtertrommel anbringbaren und dann mit der Filtertrommel mitdrehbaren Steuerkopf verbunden, welcher seinerseits mit einem stationären Steuerbauteil zusammenwirkt, an welches Luftdruckzuführvorrichtungen und Vakuumzuführvorrichtung angeschlossen sein können, um die Abführkanäle entsprechend der Drehstellung der Filtertrommel gesteuert jeweilig mit Druckluft (zur Filterkuchenabblasung) oder Vakuum (zur Filtrat-Absaugung) zu beaufschlagen.

Die Vakuum- und/oder Druck-Filtrationsvorrichtung kann eine Antriebswelle aufweisen, die sich zentral zur Filtertrommel erstreckt, wobei die Antriebswelle fest, optional in lösbarer Weise fest, mit der ersten Stütz-Platte verbunden ist, sodass ein auf die Antriebswelle aufgebrachtes Drehmoment von der Antriebswelle über die erste Stütz-Platte auf die Filtertrommel übertragen wird. Die Antriebswelle kann einteilig ausgebildet sein und kann eine sich durch die Filtertrommel hindurch zentral erstreckende Antriebswelle sein. Die Antriebswelle kann auch z.B. eine von einem ersten und einem zweiten Antriebswellenelement gebildete Antriebswelle sein, welche Antriebswellenelemente in Axialrichtung der Filtertrommel voneinander getrennt vorgesehen sind, wobei das erste Antriebswellenelement an der ersten trommelstirnseitigen Platte, z.B. an deren ersten Stütz-Platte, lastübertragend befestigt ist, und das zweite Antriebswellenelement an einer zweiten trommelstirnseitigen Platte der Filtertrommel, welche der ersten trommelstirnseitigen Platte entlang der Axialrichtung der Filtertrommel gesehen gegenüberliegt, lastübertragend befestigt ist. Falls im letzteren Falle ein Antriebsdrehmoment nur auf eines von dem ersten und dem zweiten Antriebswellenelement der Antriebswelle aufgebracht wird, dann wird das Antriebsdrehmoment nur von diesem einen von dem ersten und dem zweiten Antriebswellenelement auf die Filtertrommel übertragen, wobei dem anderen von dem ersten und dem zweiten Antriebswellenelement nur die Übertragung bzw. die Aufnahme von sonstigen Drehlagerkräften zukommt.

Wie vorausgehend erläutert, kann die Filtertrommel eine/die zweite trommelstirnseitige Platte aufweisen, welche z.B. in Form einer Ringplatte ausgebildet ist, die der ersten trommelstirnseitigen Platte entlang der Trommelachse gegenüberliegend angeordnet ist, wobei sich der Innenmantel und der Außenmantel entlang der Trommelachse zwischen den beiden trommelstirnseitigen Platten erstrecken und diese miteinander (axial) verbinden, und wobei die zweite trommelstirnseitige Platte eine zweite, lasttragende, innere Stütz-Platte(, welche z.B. in Form einer Stütz-Ringplatte ausgebildet ist), welche starr mit dem Stützmantel verbunden ist, und eine auf der zweiten Stütz-Platte angeordnete (äußere) Verkleidungsplatte (z.B. Verkleidungs-Ringplatte) aufweist, wobei die Verkleidungsplatte, der Funktionsmantel und die Funktions-Platte derart miteinander verbunden sind, dass sie bezüglich der beiden Stütz-Platten und dem Stützmantel eine Einkapselung bilden, von welcher die beiden Stütz-Platten und der Stützmantel gegen einen Berührkontakt mit der im Filterbetrieb außen an der Filtertrommel vorliegenden Suspension isoliert sind.

Mit dieser Ausgestaltung ist die lasttragende, innere Stützkonstruktion aus Stützmantel und Stütz-Platten komplett gegen Berührungskontakt mit der im Filterbetrieb außen an der Filtertrommel vorliegenden und/oder angreifenden Suspension gekapselt. Der Funktionsmantel ist entsprechend z.B. derart mit der Verkleidungsplatte verbunden, dass die zweite trommelstirnseitige Stütz-Platte gegen einen Berührungskontakt mit dem Filtrat isoliert bzw. gekapselt ist.

Die zweite trommelstirnseitige Platte kann auch z.B. in einer Weise ausgebildet sein, wie es in dieser Anmeldung für die erste trommelstirnseitigen Platte beschrieben ist, wobei dementsprechend die Verkleidungsplatte z.B. als Funktions-Platte (z.B. Funktions-Ringplatte) ausgebildet sein kann, welche in einer Weise aufgebaut sein kann, wie es in dieser Anmeldung für die Funktions-Platte der ersten trommelstirnseitigen Platte beschrieben ist. In diesem Falle ist der Innenmantel dann z.B. entlang der Trommelachse sowohl zu der ersten als auch zu der zweiten Trommelstirnseite der Filtertrommel hin konisch verjüngt ausgebildet (z.B. von jeweils zumindest in etwa der Axialmitte der Filtertrommel aus), sodass die jeweilige Ablauffläche korrespondierend in Richtung zu der ersten und zu der zweiten Trommelstirnseite der Filtertrommel hin radial nach innen geneigt verläuft, wobei dann in der zweiten trommelstirnseitigen Platte eine Mehrzahl von den Filterzellen jeweils zugeordneten Abführkanälen zum Abführen des Filtrats (z.B. integral, z.B. integral abgekapselt) ausgebildet sein kann, wobei die jeweilige Ablauffläche mit einem jeweils Zugeordneten der Abführkanäle in der zweiten trommelstirnseitigen Platte fluidverbunden ist, und wobei dann auch z.B. die zweite trommelstirnseitige Platte entlang ihres Außenumfangs mit einer Mehrzahl von Ausnehmungen (z.B. von Umfangsstirn-Ausnehmungen, d.h. von in die Umfangsstirnseite der zweiten trommelstirnseitigen Platte eingebrachten Ausnehmungen) versehen sein kann, die den Abführkanälen jeweils zugeordnet sind und die einen Zulauf des jeweils zugeordneten Abführkanals bilden, in welchen (Zulauf) die jeweils zugeordnete Ablauffläche ausmündet (z.B. unmittelbar ausmündet) und der zu dem Abführkanal hin verjüngt ausgebildet ist, sodass der jeweilige Abführkanal an der radial innersten Stelle der zugeordneten Ausnehmung der zweiten trommelstirnseitigen Platte an diese Ausnehmung angeschlossen ist.

Wie oben erläutert kann die Antriebswelle zum Beispiel fest, optional in lösbarer Weise fest, mit der zweiten trommelstirnseitigen Platte verbunden sein, sodass ein auf die Antriebswelle aufgebrachtes Drehmoment von der Antriebswelle über die beiden Stütz-Platten auf die Filtertrommel übertragen wird bzw. übertragbar ist.

Die Funktions-Platte und der Funktionsmantel und z.B. die Verkleidungsplatte sind z.B. aus einem anderen Material als die erste und/oder die zweite Stütz-Platte und der Stützmantel. Hierbei kann bei der Funktions-Platte und dem Funktionsmantel und der Verkleidungsplatte ein hinsichtlich Korrosionsbeständigkeit geeignetes Material herangezogen werden, welches keine hohen Festigkeitswerte haben muss. Im Gegensatz dazu kann bei der bzw. den Stütz-Platte/n und dem Stützmantel ein Material mit geeigneter Festigkeit zur Aufnahme der auf die Filtertrommel wirkenden Kräfte herangezogen werden, wobei die Korrosionsbeständigkeit dieses Materials niedriger sein kann als die jenes Materials oder jener Materialien, aus welchem/welchen die Funktions-Platte und der Funktionsmantel und z.B. die Verkleidungsplatte hergestellt sind.

Die Funktions-Platte und der Funktionsmantel und z.B. die Verkleidungsplatte sind z.B. aus einem gleichen Material. Die erste und/oder die zweite Stütz-Platte und der Stützmantel sind ebenfalls z.B. aus einem gleichen Material.

Die Funktions-Platte und der Funktionsmantel und z.B. die Verkleidungsplatte sind z.B. aus einem Kunststoffmaterial. Die erste Stütz-Platte (oder z.B. beide Stütz-Platten) und der Stützmantel sind z.B. aus einem schweißbaren Metallmaterial und unter Ausbildung einer lasttragenden Schweißverbindung miteinander verschweißt.

Die Erfindung wird nachfolgend anhand bevorzugter Ausführungsformen mit Bezug auf die Zeichnung erläutert. In der Zeichnung zeigen:
Fig. 1 eine schematische Ansicht einer Druck- und/oder Vakuum-Filtrationsvorrichtung mit einer aufgeschnittenen perspektivisch gezeigten Filtertrommel,
Fig. 2 eine teilweise aufgeschnittene Frontansicht der Filtertrommel von Fig. 1 in Richtung des Pfeils A,
Fig. 3 eine Teillängsschnittansicht der Filtertrommel von Fig. 1,
Fig. 4 eine Detailansicht des Details D der Filtertrommel von Fig. 1,
Fig. 5 eine Detailansicht des Details B der Filtertrommel von Fig. 3,
Fig. 6 eine schematische Detailansicht eines Ausschnitts von Fig. 2,
Fig. 7 eine schematische Teillängsschnittansicht der Filtertrommel von Fig. 1 und
Fig. 8 eine weitere Ausführungsform einer Druck- und/oder Vakuum-Filtrationsvorrichtung mit einer schematischen Teillängsschnittansicht ihrer Filtertrommel.

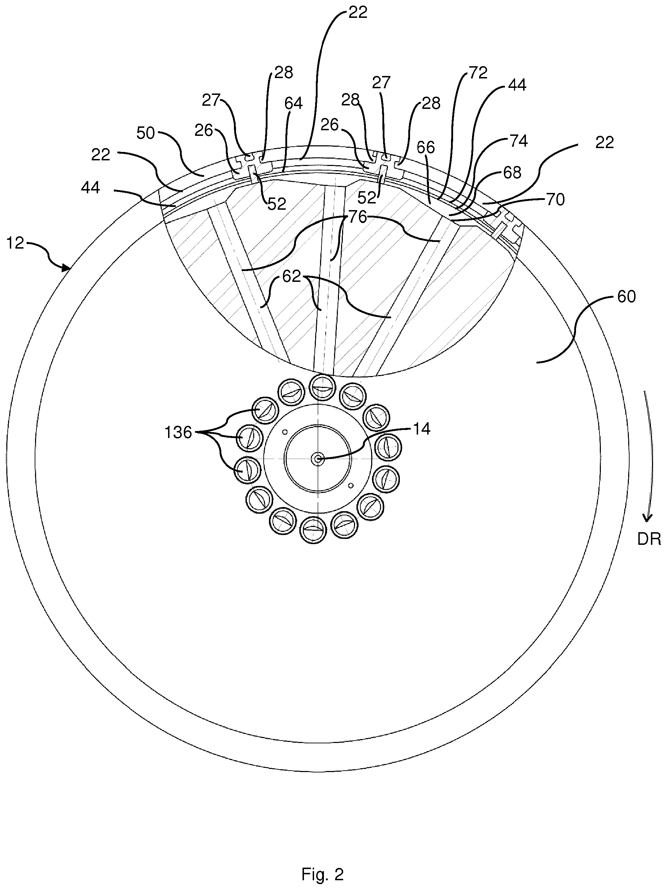

Wie aus den Figuren ersichtlich ist, weist eine Vakuum-und/oder Druck-Filtrationsvorrichtung 10 zum Filtern einer Suspension, welche Feststoff und Flüssigkeit umfasst, auf: eine Filtertrommel 12, wobei die Filtertrommel 12 eine Trommelachse 14 definiert, wobei die Filtertrommel 12 um die Trommelachse 14 über Drehlager 16, 18 drehbar gelagert ist, und wobei die Filtertrommel 12 aufweist einen Außenmantel 20, der z.B. zylindrisch ausgebildet ist und von welchem eine Mehrzahl von Filterzellen 22 ausgebildet sind, die langgestreckt ausgebildet sind und sich längs der Trommelachse 14 erstrecken und die rings der Trommelachse 14 zueinander benachbart angeordnet sind. Zwischen den Filterzellen 22 erstrecken sich Trennleisten (z.B. Halteleisten, z.B. Klemmleisten) 26, die sich längs entlang der Trommelachse 14 erstrecken. Die Trennleisten 26 weisen an ihrer radial nach außen weisenden Seite jeweils eine Trennleisten-Nut 27 (siehe z.B. Fig. 2) auf, die sich entlang der Trommelachse 14 über die gesamte Länge der Trennleisten 26 erstreckt. Zwischen jeweils zwei benachbarten Trennleisten 26 ist jeweils ein Filtermedium 24 angeordnet, welches mittels dieser benachbarten Trennleisten 26 an der Filtertrommel 12 gehalten ist, indem es z.B. an seinen Rändern entlang in die jeweils zugeordnete Trennleisten-Nut 27 der beiden benachbarten Trennleisten 26 mittels eines nicht dargestellten Klemmstabs oder Klemmkeders geklemmt ist, welcher sich in und entlang der Trennleisten-Nut 27 erstreckt. Das jeweilige Filtermedium 24 kann beispielsweise ein flexibles Siebgewebe sein.

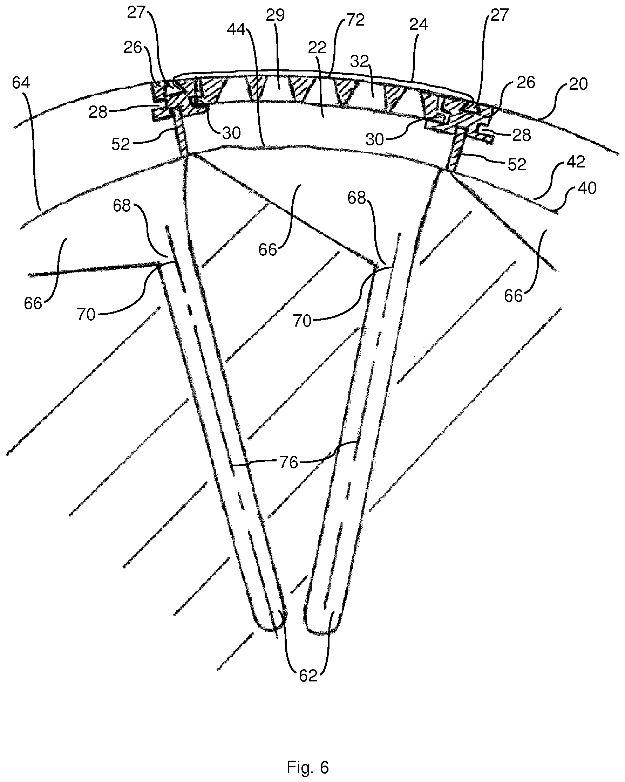

Ferner weisen die Trennleisten 26 z.B. jeweils auf ihren einander entgegengesetzten Längsseiten zwei Längsseitennuten 28 auf, die sich entlang der Trommelachse 14 erstrecken, z.B. über die gesamte Länge der Trennleisten 26 erstrecken. Zwischen zwei benachbarten Trennleisten 26 ist z.B. jeweils eine Mehrzahl von Filterzelleneinsätzen 29 angeordnet, welche an ihren Seitenrändern 30 in den Längsseitennuten 29 aufgenommen sind (siehe z.B. Fig. 6) und welche jeweils zusammen pro Filterzelle 22 eine stabile radiale Auflage für das jeweilige außen auf den Filterzelleinsätzen 29 angeordnete Filtermedium 24 der jeweiligen Filterzelle 22 bilden. Die Filterzelleneinsätze 29 weisen ferner (radiale) Filtratdurchtrittsöffnungen 32 auf, durch welche (hindurch) das Filtrat, welches das darauf liegende Filtermedium 24 passiert hat, die Filterzelleneinsätze 29 zu einem wie nachfolgend beschriebenen Innenmantel 40 der Filtertrommel 12 passieren kann bzw. passiert.

Die Filtertrommel 12 kann beispielsweise derart angeordnet sein, dass sie innerhalb einer Wanne W rotiert, in welcher sich die zu filternde Suspension S befindet.

Die Filtertrommel 12 weist ferner auf einen Innenmantel 40, der zu dem Außenmantel 20 (radial innen) benachbart angeordnet ist und der eine Innenmantel-Außenfläche 42 hat, welche die Filterzellen 22 radial innen begrenzt, sodass von der Innenmantel-Außenfläche 42 eine Mehrzahl von Ablaufflächen 44, von denen jeder Filterzelle 22 jeweils eine zugeordnet ist, gebildet wird, auf welchen die Flüssigkeit, die beim Filtern der Suspension durch das jeweilige Filtermedium 24 passiert, als Filtrat ablaufen kann, und der entlang der Trommelachse 14 zu einer Trommelstirnseite 50 der Filtertrommel 12 hin konisch verjüngt ausgebildet ist, sodass die jeweilige Ablauffläche 44 korrespondierend in Richtung zu der einen Trommelstirnseite 50 der Filtertrommel 12 hin radial nach innen geneigt verläuft. Die Trennleisten 26 sind mittels Trennstegen 52 an dem Innenmantel 40 befestigt, welche Trennstege 52 langgestreckt sind und sich längs der Trommelachse 14 erstrecken und (zusammen mit den Trennleisten 26) benachbarte Filterzellen 22 in Umfangsrichtung der Filtertrommel 12 voneinander separieren/trennen.

Die Filtertrommel 12 weist ferner auf eine erste trommelstirnseitige Platte 60, die hier als eine Ringplatte 60 ausgebildet ist (nachfolgend wird weiterhin der Begriff "erste Ringplatte 60" verwendet, wobei die damit im Zusammenhang beschriebenen Merkmale auch für die erste trommelstirnseitige Platte 60 gelten), in welcher eine Mehrzahl von den Filterzellen 22 jeweils zugeordneten Abführkanälen 62 zum Abführen des Filtrats ausgebildet ist, wobei die Ablaufflächen 44 und die Abführkanäle 62 in jeweils einander zugeordneter Weise miteinander fluidverbunden sind, wobei die erste trommelstirnseitige Ringplatte 60 entlang ihres Außenumfangs 64 mit einer Mehrzahl von Ausnehmungen 66 versehen ist, die den Abführkanälen 62 jeweils zugeordnet sind und die einen Zulauf 68 des jeweils zugeordneten Abführkanals 62 bilden, in welchen die jeweils zugeordnete Ablauffläche 44 ausmündet und der zu dem Abführkanal 62 hin verjüngt ausgebildet ist, sodass der jeweilige Abführkanal 62 an der radial innersten Stelle 70 der zugeordneten Ausnehmung 66 an diese angeschlossen ist.

Die radial innerste Stelle 70 jeder Ausnehmung 66 ist, gesehen in Richtung der Trommelachse 14, bezüglich einer Umfangsmitte 72 eines äußeren Umfangsabschnitts 74 der jeweiligen Filterzelle 22 (z.B. der jeweiligen Ausnehmung 66) in der im Filterbetrieb gefahrenen Drehrichtung DR der Filtertrommel 12 versetzt angeordnet. In anderen Worten ist die radial innerste Stelle 70 jeder Ausnehmung 66 so angeordnet, dass sie bezüglich der Mittellinie 76 des korrespondierenden Abführkanals 62 derart asymmetrisch ausgebildet ist, dass, gesehen von der Mittellinie 76 des korrespondierenden Abführkanals 62 aus, ein kleinerer Abschnitt der Ausnehmung 66 (z.B. < 30 % der Gesamtgröße der Ausnehmung 66) in Richtung der Drehrichtung DR gebildet ist und ein größerer Abschnitt der Ausnehmung 66 (z.B. ≥ 70 % der Gesamtgröße der Aussparung 66) entgegengesetzt zu der Drehrichtung DR gebildet ist.

Die erste trommelstirnseitige Ringplatte 60 weist ferner eine erste lasttragende, innere (entlang der Trommelachse 14 gesehen axial innere) Stütz-Platte 90, die hier als Stütz-Ringplatte 90 ausgebildet ist (nachfolgend wird weiterhin der Begriff "erste Stütz-Ringplatte 90" verwendet, wobei die damit im Zusammenhang beschriebenen Merkmale auch für die erste Stütz-Platte 90 gelten), und eine äußere (entlang der Trommelachse 14 gesehen axial innere) Funktions-Platte 100, die hier als Funktions-Ringplatte 100 ausgebildet ist, auf (nachfolgend wird weiterhin der Begriff "Funktions-Ringplatte 100" verwendet, wobei die damit im Zusammenhang beschriebenen Merkmale auch für die äußere Funktions-Platte 100 gelten). Die äußere Funktions-Ringplatte 100 wird von der ersten Stütz-Ringplatte 90 gestützt (bzw. gehalten), zum Beispiel ist die Funktions-Ringplatte 100 flächig mit der ersten Stütz-Ringplatte 90 verbunden. Diese Verbindung kann beispielsweise mittels Schweißens oder Klebens ausgeführt sein. Ferner sind in der Funktions-Ringplatte 100 die Abführkanäle 62 und die Ausnehmungen 66 isoliert von der ersten Stütz-Ringplatte 90 (z.B. integral) ausgebildet. In anderen Worten sind die Abführkanäle 62 und die Ausnehmungen 66 in der Funktions-Ringplatte 100 derart gebildet, dass darin vorliegendes Fluid (z.B. das darin vorliegende Filtrat) nicht in Kontakt mit der ersten Stütz-Ringplatte 90 gelangen kann.

Die Funktions-Ringplatte 100 kann beispielsweise aus einem Kunststoffmaterial oder aus einem metallischen oder keramischen Material gebildet sein, welches jeweilig so ausgewählt ist, dass es hinsichtlich einer Kontaktberührung mit der Suspension und/oder dem Filtrat unempfindlich bzw. (korrosions-)beständig ist. Ferner kann die Funktions-Ringplatte 100 mit einem derartigen Kunststoff oder einer derartigen metallischen oder keramischen Schicht beschichtet sein.

Der Innenmantel 40 weist einen lasttragenden, inneren Stützmantel 110 und einen äußeren Funktionsmantel 120 auf. Der äußere Funktionsmantel 120 wird von dem Stützmantel 110 gestützt bzw. getragen bzw. gehalten. Beispielsweise ist der äußere Funktionsmantel 120 flächig mit dem Stützmantel 110 mittels Klebens oder Schweißens verbunden. Ferner ist die Innenmantel-Außenfläche 42 von dem äußeren Funktionsmantel 120 in einer von dem Stützmantel 110 isolierten Weise gebildet. In anderen Worten dient der äußere Funktionsmantel 120 dazu, den Stützmantel 110 vor schädlichen Einflüssen des Filtrats und ggf. der Suspension in dem Zwischenraum (radial) zwischen dem äußeren Funktionsmantel 120 und dem Außenmantel 20, nämlich in der Filterzelle 22, zu schützen bzw. davon abzuschirmen. Der äußere Funktionsmantel 120 kann beispielsweise aus einem Kunststoffmaterial oder aus einem metallischen oder keramischen Material gebildet sein, das jeweilig so ausgewählt ist, dass es gegen eine Berührung/einen Kontakt mit der Suspension und/oder dem Filtrat unempfindlich, z.B. (korrosions-)beständig ist. Ferner oder alternativ kann der äußere Funktionsmantel 120 auch mit einem solchen Kunststoffmaterial oder einem solchen metallischen oder keramischen Material beschichtet sein. Der Stützmantel 110 und die erste Stütz-Ringplatte 90 sind (z.B. unter Ausbildung einer lasttragenden Verbindung) starr miteinander verbunden (z.B. aneinander geschweißt).

Die Vakuum- und/oder Druck-Filtrationsvorrichtung 10 weist ferner eine Antriebswelle 130 auf. Die Antriebswelle 130 erstreckt sich zentral durch die Filtertrommel 12 hindurch. Die Antriebswelle 130 kann fest oder optional in lösbarer Weise fest mit der ersten, inneren Stütz-Ringplatte 90 verbunden sein, sodass ein auf die Antriebswelle 130 aufgebrachtes Drehmoment von der Antriebswelle 130 über die erste Stütz-Ringplatte 90 auf die Filtertrommel 12 übertragen werden kann. Die Verbindung der Antriebswelle 130 mit der ersten, inneren Stütz-Ringplatte 90 ist in den Figuren lösbar mittels einer ersten Spannvorrichtung (z.B. Spannringvorrichtung) 132 ausgeführt, wobei die erste Spannvorrichtung 132 derart zwischen der ersten, inneren Stütz-Ringplatte 90 und der Antriebswelle 130 angeordnet ist, dass sie in radialer Richtung eine Kraft auf die erste, innere Stütz-Ringplatte 90 und die Antriebswelle 130 ausübt und diese dadurch kraftschlüssig miteinander verbindet, sodass eine Drehbewegung der Antriebswelle 130 auf die erste, innere Stütz-Ringplatte 90 (kraftschlüssig) übertragen wird bzw. übertragbar ist. Das aufgebrachte Drehmoment kann beispielsweise von einem Antrieb M, z.B. einem Elektromotor, bereitgestellt werden, der mittels einer mechanischen Kopplung K, z.B. mittels Zahnrädern, einer Kette und/oder einem Riemen, mit der Filtertrommel 12 gekoppelt ist. Zwischen der ersten trommelstirnseitigen Ringplatte 60 und der Antriebwelle 130 ist zur Abdichtung der Filtertrommel 12 gegen die Antriebswelle 130 eine Dichtvorrichtung (z.B. Ringdichtvorrichtung) 134 angebracht, welche beispielsweise mittels eines Dichtrings oder mittels einer (nichtlasttragenden) Schweißdichtung gebildet sein kann.

Rings der Antriebswelle 130 sind in der ersten trommelstirnseitigen Ringplatte 60 bzw. in deren Funktions-Ringplatte 100 eine Anzahl/Mehrzahl von Abführkanal-Anschlussöffnungen 136 ausgebildet (z.B. integral ausgebildet), welche einem jeweiligen Filtrat-Abführkanal 62 zugeordnet sind und welche im Filterbetrieb mit einem nicht dargestellten Steuerkopf verbunden sind, über welchen dem jeweiligen Abführkanal 62 und damit der mit diesem fluidverbundenen Filterzelle 22 in gesteuerter Weise in Abhängigkeit von der Drehung der Filtertrommel 12 ein Vakuum und/oder ein Luftdruck zuführbar ist.

Die Filtertrommel 12 weist eine zweite trommelstirnseitige Platte 140, die hier als Ringplatte 140 ausgebildet ist, auf (nachfolgend wird weiterhin der Begriff "zweite trommelstirnseitige Ringplatte 140" verwendet, wobei die damit im Zusammenhang beschriebenen Merkmale auch für die zweite trommelstirnseitige Platte 140 gelten), die der ersten trommelstirnseitigen Ringplatte 60 entlang der Trommelachse 14 gegenüberliegend angeordnet ist. Hierbei erstrecken sich der Innenmantel 40 und der Außenmantel 20 entlang der Trommelachse 14 zwischen den beiden trommelstirnseitigen Ringplatten 60, 140 und verbinden diese miteinander. Die zweite trommelstirnseitige Ringplatte 140 weist eine zweite, lasttragende, innere Stütz-Platte 150, welche hier als Stütz-Ringplatte 150 ausgebildet ist, auf (nachfolgend wird weiterhin der Begriff "zweite Stütz-Ringplatte 150" verwendet, wobei die damit im Zusammenhang beschriebenen Merkmale auch für die zweite Stütz-Platte 150 gelten), welche (unter Ausbildung einer lasttragenden Verbindung) starr mit dem Stützmantel 110 verbunden ist, beispielsweise mittels Schweißens verbunden ist. Ferner weist die zweite trommelstirnseitige Ringplatte 140 eine auf der zweiten, inneren Stütz-Ringplatte 150 angeordnete (äußere bzw. axial äußere) Verkleidungsplatte (z.B. Verkleidungs-Ringplatte) 160 auf. Die Verkleidungsplatte 160, der Funktionsmantel 120 und die Funktions-Ringplatte 100 sind derart miteinander verbunden, dass sie bezüglich der beiden Stütz-Ringplatten 60, 140 und dem Innenmantel 40 eine Einkapselung bilden, von welcher die beiden Stütz-Ringplatten und der Innenmantel 40 gegen einen Berührkontakt mit der im Filterbetrieb außen an der Filtertrommel 12 vorliegenden Suspension S isoliert sind.

Die Antriebswelle 130 kann fest oder optional in lösbarer Weise fest mit der zweiten trommelstirnseitigen Ringplatte 140 verbunden sein, sodass ein auf die Antriebswelle 130 aufgebrachtes Drehmoment von der Antriebswelle 130 über die beiden Stütz-Ringplatten 60, 140 auf die Filtertrommel 12 übertragen werden kann. Die Verbindung der Antriebswelle 130 mit der zweiten trommelstirnseitigen Ringplatte 140 ist in den Figuren in lösbarer Weise mittels einer zweiten Spannvorrichtung (z.B. Spannringvorrichtung) 162 ausgeführt, wobei die zweite Spannvorrichtung 162 derart zwischen der zweiten trommelstirnseitigen Ringplatte 140 und der Antriebswelle 130 angeordnet ist, dass sie in radialer Richtung eine Kraft auf die zweite trommelstirnseitige Ringplatte 140 und die Antriebswelle 130 ausübt und diese dadurch (kraftschlüssig) miteinander verbindet, sodass eine Drehbewegung der Antriebswelle 130 auf die zweite trommelstirnseitige Ringplatte 140 übertragen wird. Zwischen der zweiten trommelstirnseitigen Ringplatte 140 und der Antriebwelle 130 ist zur Abdichtung der Filtertrommel 12 gegen die Antriebswelle 130 ebenfalls eine Dichtvorrichtung (z.B. Ringdichtvorrichtung) 164 angebracht, welche beispielsweise mittels eines Dichtrings oder mittels einer (nichtlasttragenden) Schweißdichtung gebildet sein kann.

Die Funktions-Ringplatte 100 und der Funktionsmantel 120 sowie auch z.B. die Verkleidungsplatte 160 und der Funktionsmantel 120 sind zum Beispiel jeweils aus einem Kunststoffmaterial gebildet oder mit einem Kunststoffmaterial beschichtet, welches Kunststoffmaterial bzw. welche Kunststoffmaterialien miteinander verschweißbar ist/sind, wobei die Schweißverbindung zwischen der Funktions-Ringplatte 100 und dem Funktionsmantel 120 sowie auch z.B. zwischen der Verkleidungsplatte 160 und dem Funktionsmantel 120 nicht lasttragend ausgebildet ist/sind. Die erste Stütz-Ringplatte 90 (und/oder die zweite Stütz-Ringplatte 150) und der Stützmantel 110 sind zum Beispiel jeweils aus einem Metallmaterial und sind unter Ausbildung einer lasttragenden Schweißverbindung miteinander verschweißt.

Die erste trommelstirnseitige Ringplatte 60 und die zweite trommelstirnseitige Ringplatte 140 sind an ihrem äußeren Umfang jeweils von einem Haltering 166 umgeben, in dessen äußeren Umfangsstirnfläche eine Haltring-Nut 168 ausgebildet ist. In diesen umfänglichen Haltering-Nuten 168 ist das Filtermedium 24 der jeweiligen Filterzelle 22 mit seinen stirnseitigen Filtermedium-Rändern aufgenommen und darin mittels eines nicht gezeigten, jeweiligen Ringstabs oder eines Ringkeders festgeklemmt, welcher sich in und entlang der Halterring-Nut 68 erstreckt.

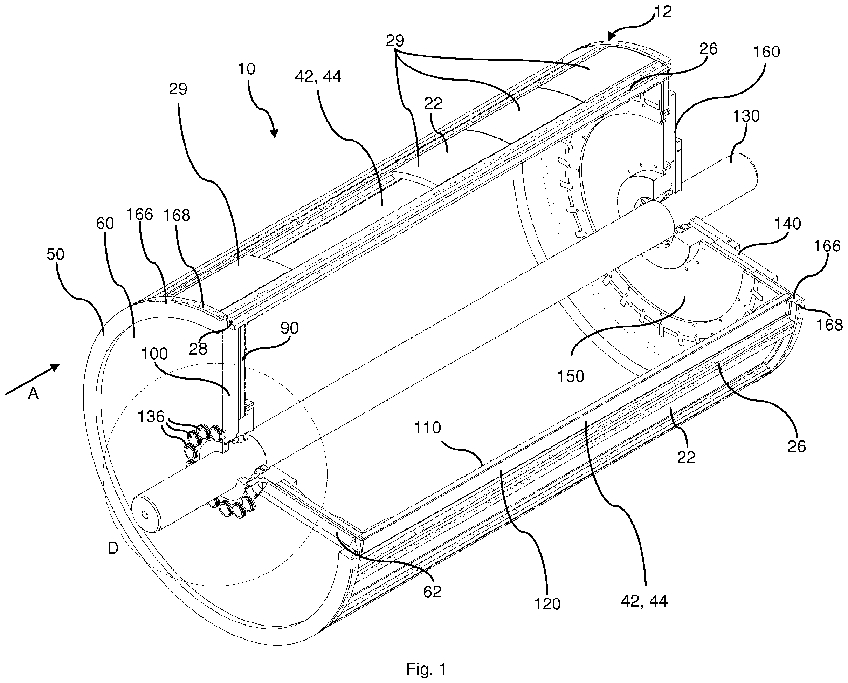

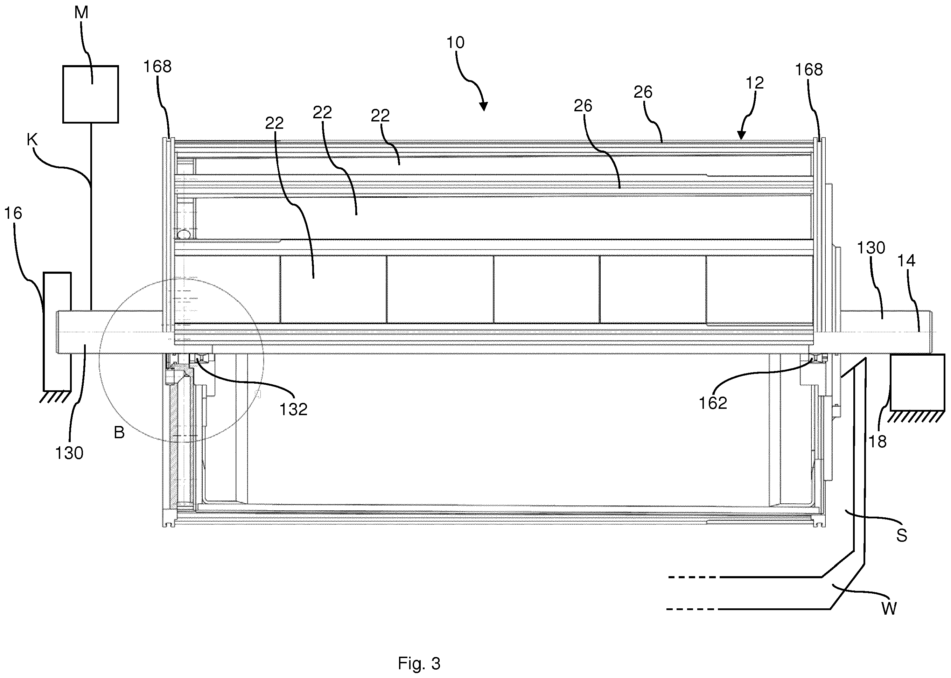

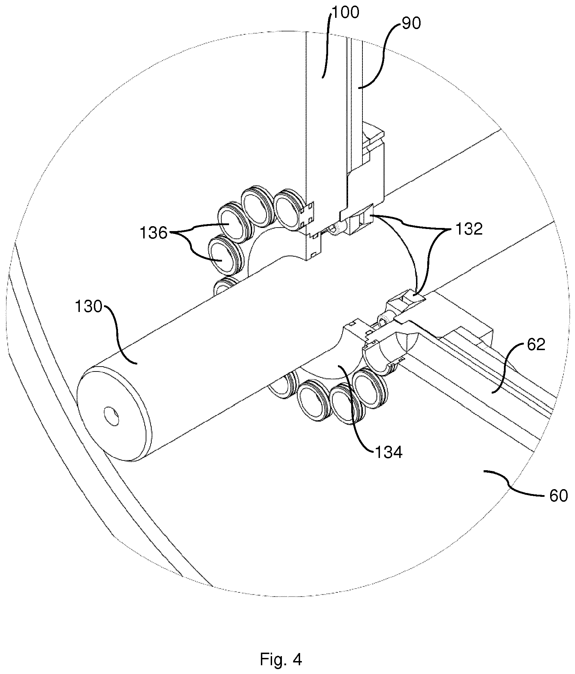

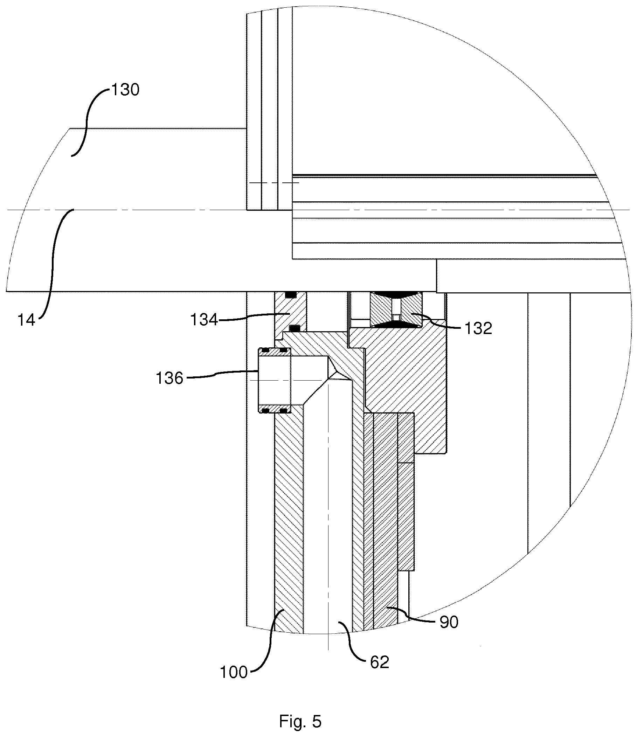

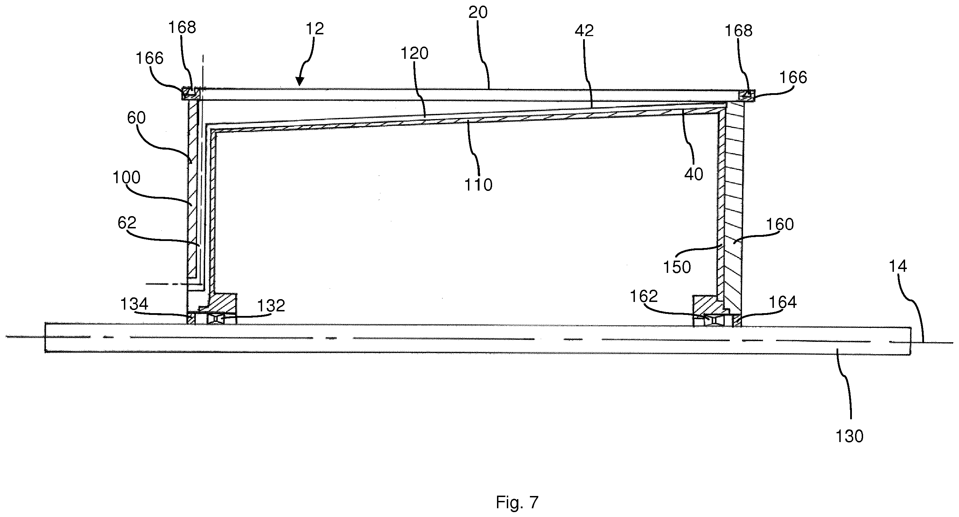

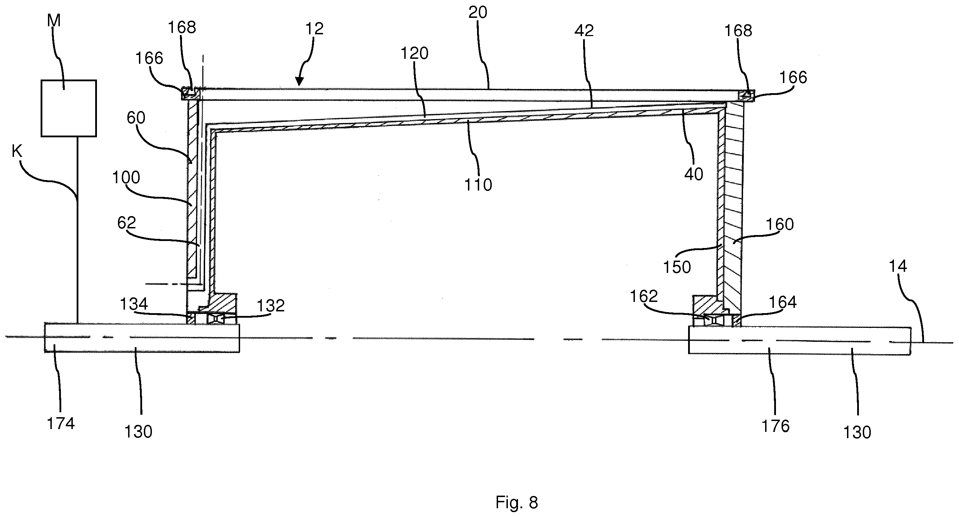

Im Folgenden wird eine Vakuum- und/oder Druck-Filtrationsvorrichtung gemäß einer weiteren Ausführungsform basierend auf Fig. 8 beschrieben. Die Ausführungsform von Fig. 8 weist im Wesentlichen alle Merkmale der Ausführungsform der Figuren 1 bis 7 auf, sodass im Folgenden nur die Unterschiede zwischen diesen Ausführungsformen beschrieben werden.

Gemäß der Ausführungsform von Fig. 8 kann die Antriebswelle 130 einer Vakuum- und/oder Druck-Filtrationsvorrichtung z.B. auch eine von einem ersten 174 und einem zweiten 176 Antriebswellenelement gebildete Antriebswelle 130 sein, welche Antriebswellenelemente 174, 176 in Axialrichtung der Filtertrommel 12 voneinander getrennt vorgesehen sind, wobei das erste Antriebswellenelement 174 an der ersten trommelstirnseitigen Ringplatte 60 mittels der ersten Spannvorrichtung 132 lastübertragend befestigt ist und das zweite Antriebswellenelement 176 an der zweiten trommelstirnseitigen Ringplatte 140 mittels der zweiten Spannvorrichtung 162 lastübertragend befestigt ist. Wie in Fig. 8 exemplarisch dargestellt ist, wird ein von dem Elektromotor M bereitgestelltes Drehmoment mittels der mechanischen Kopplung K nur auf das erste Antriebswellenelement 174 der Antriebswelle 130 aufgebracht, und das Antriebsdrehmoment wird nur von diesem ersten Antriebswellenelement 174 auf die Filtertrommel 12 übertragen, wobei dem zweiten Antriebswellenelement 176 nur die Übertragung bzw. die Aufnahme von sonstigen Drehlagerkräften zukommt.

Obwohl die Erfindung anhand vor Ausführungsformen beschrieben wurde, ist die Erfindung nicht auf diese Ausführungsformen beschränkt. Der Fachmann wird stattdessen auch Alternativen und Modifikationen als von der Erfindung umfasst ansehen, sofern innerhalb des durch die Ansprüche definierten Schutzumfangs liegend. So ist die Erfindung z.B. nicht auf die Verbundbauweise der im Ausführungsbeispiel beschriebenen Filtertrommel beschränkt, wobei z.B. der Innenmantel und z.B. auch die jeweilige trommelstirnseitige Ringplatte als jeweils ein einziges Bauteil aus einem einzigen Material hergestellt sein können.

So kann z.B. die Verkleidungsplatte (z.B. Verkleidungs-Ringplatte) 160 ebenfalls als eine Funktionsplatte ausgebildet sein, die in einer Weise ausgebildet sein kann, wie es in dieser Anmeldung und/oder anhand der vorausgehenden Ausführungsbeispiele für die Funktions-Platte (bzw. Funktions-Ringplatte) 100 der ersten trommelstirnseitigen Platte/RingPlatte 60 beschrieben ist.

### Bezugzeichenliste

- 10: Vakuum- und/oder Druck-Filtrationsvorrichtung
- 12: Filtertrommel
- 14: Trommelachse
- 16: Drehlager
- 18: Drehlager
- 20: Außenmantel
- 22: Filterzellen
- 24: Filtermedium
- 26: Trennleiste
- 27: Trennleisten-Nut
- 28: Längsseitennut
- 29: Filterzelleneinsatz
- 30: Rand von Filtereinsatzelement
- 32: Filtratdurchtrittsöffnungen
- W: Wanne
- S: zu filternde Suspension
- M: Antrieb
- K: mechanische Kopplung
- 40: Innenmantel
- 42: Innenmantel-Außenfläche
- 44: Ablauffläche
- 50: Trommelstirnseite
- 52: Trennsteg
- 60: erste trommelstirnseitige Platte/Ringplatte
- 62: Abführkanal
- 64: Außenumfang
- 66: Ausnehmung
- 68: Zulauf
- 70: radial innerste Stelle
- 72: Umfangsmitte
- 74: äußerer Umfangsabschnitt
- DR: Drehrichtung
- 76: Mittellinie
- 90: erste innere Stütz-Platte/Ringplatte
- 100: äußere Funktions-Platte/Ringplatte
- 110: innerer Stützmantel
- 120: äußerer Funktionsmantel
- 130: Antriebswelle
- 132: erste Spannvorrichtung
- 134: Dichtvorrichtung
- 136: Abführkanal-Anschlussöffnungen
- 140: zweite trommelstirnseitige Platte/Ringplatte
- 150: zweite innere Stütz-Platte/Ringplatte
- 160: Verkleidungsplatte
- 162: zweite Spannvorrichtung
- 164: weitere Dichtvorrichtung
- 166: Haltering
- 168: Haltering-Nut
- 174: erstes Antriebswellenelement
- 176: zweites Antriebswellenelement

## Patentansprüche

1. Vakuum- und/oder Druck-Filtrationsvorrichtung (10) zum Filtern einer Suspension (S), welche Feststoff und Flüssigkeit umfasst, mit einer Filtertrommel (12), wobei die Filtertrommel
- eine Trommelachse (14) definiert,
- um die Trommelachse drehbar gelagert ist,
- einen Außenmantel (20) aufweist,
- von welchem eine Mehrzahl von Filterzellen (22) ausgebildet sind,
- die sich längs der Trommelachse erstrecken,
- die rings der Trommelachse zueinander benachbart angeordnet sind und
- die an ihrer Außenseite mit einem Filtermedium (24) versehen sind,
- einen Innenmantel (40) aufweist,
- der zu dem Außenmantel benachbart angeordnet ist,
- der eine Innenmantel-Außenfläche (42) hat, welche
- die Filterzellen radial innen begrenzt, sodass von der Innenmantel-Außenfläche eine Mehrzahl von Ablaufflächen (44) gebildet wird,
- auf welchen die Flüssigkeit, die beim Filtern der Suspension durch das jeweilige Filtermedium passiert, als Filtrat ablaufen kann, und
- der entlang der Trommelachse zumindest zu einer ersten Trommelstirnseite
(50) der Filtertrommel hin konisch verjüngt ausgebildet ist, sodass die jeweilige Ablauffläche korrespondierend zumindest in Richtung zu der ersten Trommelstirnseite der Filtertrommel hin radial nach innen geneigt verläuft, und
- eine erste trommelstirnseitige Platte (60) aufweist,
- in welcher eine Mehrzahl von den Filterzellen jeweils zugeordneten Abführkanälen (62) zum Abführen des Filtrats ausgebildet ist, wobei die jeweilige Ablauffläche mit einem jeweils Zugeordneten der Abführkanäle fluidverbunden ist,
- wobei die erste trommelstirnseitige Platte entlang ihres Außenumfangs mit einer Mehrzahl von Ausnehmungen (66) versehen ist,
- die den Abführkanälen jeweils zugeordnet sind und
- die einen Zulauf (68) des jeweils zugeordneten Abführkanals bilden,
- in welchen die jeweils zugeordnete Ablauffläche ausmündet und
- der zu dem Abführkanal hin verjüngt ausgebildet ist, sodass der jeweilige Abführkanal an der radial innersten Stelle (70) der zugeordneten Ausnehmung an diese angeschlossen ist.

2. Vakuum- und/oder Druck-Filtrationsvorrichtung gemäß Anspruch 1, wobei in Richtung der Trommelachse gesehen die radial innerste Stelle (70) jeder Ausnehmung (66) bezüglich einer Umfangsmitte (72) eines äußeren Umfangsabschnitts (74) der jeweiligen Filterzelle (22) in eine Drehrichtung der Filtertrommel (12) versetzt angeordnet ist.

3. Vakuum- und/oder Druck-Filtrationsvorrichtung gemäß Anspruch 1 oder 2, wobei die erste trommelstirnseitige Platte (60) eine erste, lasttragende, innere Stütz-Platte (90) und eine äußere Funktions-Platte (100) aufweist, welche von der ersten Stütz-Platte (90) gestützt wird und in welcher die Abführkanäle (62) und die Ausnehmungen (66) isoliert von der ersten Stütz-Platte (90) ausgebildet sind.

4. Vakuum- und/oder Druck-Filtrationsvorrichtung gemäß einem der Ansprüche 1 bis 3, wobei der Innenmantel (40) einen lasttragenden, inneren Stützmantel (110) und einen äußeren Funktionsmantel (120) aufweist, welcher von dem Stützmantel (110) gestützt wird und von welchem die Innenmantel-Außenfläche (42) in einer von dem Stützmantel (110) isolierten Weise gebildet wird.

5. Vakuum- und/oder Druck-Filtrationsvorrichtung gemäß Anspruch 3 und 4, wobei der Stützmantel (110) und die erste Stütz-Platte (90) starr miteinander verbunden sind, und wobei der Stützmantel (110), die erste Stütz-Platte (90), die äußere Funktions-Platte (100) und der Funktionsmantel (120) derart angeordnet und eingerichtet sind, dass der Stützmantel (110) und die erste Stütz-Platte (90) sowohl von den Ausnehmungen (66) als auch von der Innenmantel-Außenfläche (42) isoliert sind.

6. Vakuum- und/oder Druck-Filtrationsvorrichtung gemäß Anspruch 3 und 4 oder gemäß Anspruch 5, mit einer Antriebswelle (130), die sich zentral zur Filtertrommel (12) erstreckt, wobei die Antriebswelle (130) fest, optional in lösbarer Weise fest, mit der ersten Stütz-Platte (90) verbunden ist, sodass ein auf die Antriebswelle (130) aufgebrachtes Drehmoment von der Antriebswelle (130) über die erste Stütz-Platte (90) auf die Filtertrommel (12) übertragen wird.

7. Vakuum- und/oder Druck-Filtrationsvorrichtung gemäß Anspruch 6, wobei die Filtertrommel (12) eine zweite trommelstirnseitige Platte (140) aufweist, die der ersten trommelstirnseitigen Platte (60) entlang der Trommelachse (14) gegenüberliegend angeordnet ist, wobei sich der Innenmantel (40) und der Außenmantel (20) entlang der Trommelachse (14) zwischen den beiden trommelstirnseitigen Platten (60, 140) erstrecken und diese miteinander verbinden, und wobei die zweite trommelstirnseitige Platte (140) eine zweite, lasttragende, innere Stütz-Platte (150), welche starr mit dem Stützmantel (110) verbunden ist, und eine auf der zweiten Stütz-Platte (150) angeordnete Verkleidungsplatte (160) aufweist, wobei die Verkleidungsplatte (160), der Funktionsmantel (120) und die Funktions-Platte (100) derart miteinander verbunden sind, dass sie bezüglich der beiden Stütz-Platten (90, 150) und dem Stützmantel (110) eine Einkapselung bilden, von welcher die beiden Stütz-Platten (90, 150) und der Stützmantel (110) gegen einen Berührkontakt mit der im Filterbetrieb außen an der Filtertrommel (12) vorliegenden Suspension (S) isoliert sind.

8. Vakuum- und/oder Druck-Filtrationsvorrichtung gemäß Anspruch 7, wobei die Antriebswelle (130) fest, optional in lösbarer Weise fest, mit der zweiten trommelstirnseitigen Platte (140) verbunden ist, sodass ein auf die Antriebswelle (130) aufgebrachtes Drehmoment von der Antriebswelle (130) über die beiden Stütz-Platten (90, 150) auf die Filtertrommel (12) übertragen wird.

9. Vakuum- und/oder Druck-Filtrationsvorrichtung gemäß einem der vorigen Ansprüche sofern in Kombination mit den Ansprüchen 3 und 4, wobei die Funktions-Platte (100) und der Funktionsmantel (120) aus einem anderen Material sind als die erste Stütz-Platte (90) und der Stützmantel (110).

10. Vakuum- und/oder Druck-Filtrationsvorrichtung gemäß Anspruch 9, wobei die Funktions-Platte (100) und der Funktionsmantel (120) aus einem gleichen Material sind, und/oder wobei die erste Stütz-Platte (90) und der Stützmantel (110) aus einem gleichen Material sind.

11. Vakuum- und/oder Druck-Filtrationsvorrichtung gemäß Anspruch 9 oder 10, wobei die Funktions-Platte (100) und der Funktionsmantel (120) aus einem Kunststoffmaterial sind, und/oder wobei die erste Stütz-Platte (90) und der Stützmantel (110) aus einem schweißbaren Metallmaterial sind und unter Ausbildung einer lasttragenden Schweißverbindung miteinander verschweißt sind.

## Claims

1. Vacuum and/or pressure filtration device (10) for filtration of a suspension (S) which comprises a solid and a liquid, having a filter drum (12), wherein the filter drum
- defines a drum axis (14),
- is rotatably supported around the drum axis,
- includes an outer jacket (20),
- by which a plurality of filter cells (22) are formed,
- which extend along the drum axis,
- which are arranged adjacent to each other all around the drum axis, and
- which are equipped on their outer side with a filter medium (24),
- comprises an inner jacket (40),
- which is arranged adjacent to the outer jacket,
- which has an inner jacket outer surface (42) which
- limits the filter cells radially inside such that by the inner jacket outer surface a plurality of draining surfaces (44) are formed
- on which the liquid passing through the respective filter medium during filtration of the suspension can drain off as a filtrate, and
- which is formed along the drum axis in a manner so as to be conically tapered at least toward a first drum end face (50) of the filter drum such that the respective draining surface correspondingly extends at least toward the first drum end face of the filter drum in a manner so as to be inclined radially and inwardly, and
- comprises a first drum end face-sided plate (60)
- in which a plurality of discharge channels (62) are formed, which are respectively assigned to the filter cells, for discharging the filtrate, wherein the respective draining surface is fluidly connected to a respectively assigned one of the discharge channels,
- wherein the first drum end face-sided plate is equipped with a plurality of recesses (66) along its outer circumference,
- which are respectively assigned to the discharge channels, and
- which form an inlet (68) of the respectively assigned discharge channel
- into which the respectively assigned draining surface leads and
- which is formed in a manner so as to be tapered toward the discharge channel such that the respective discharge channel is connected to the assigned recess at the radially innermost site (70) thereof.

2. Vacuum and/or pressure filtration device according to claim 1, wherein, seen in direction of the drum axis, the radially innermost site (70) of each recess (66) is arranged offset with respect to a circumferential center (72) of an outer circumferential portion (74) of the respective filter cell (22) in a direction of rotation of the filter drum (12).

3. Vacuum and/or pressure filtration device according to claim 1 or 2, wherein the first drum end face-sided plate (60) includes a first load-bearing inner support plate (90) and an outer functional plate (100) which is supported by the first support plate (90) and in which the discharge channels (62) and the recesses (66) are formed in a manner so as to be isolated from the first support plate (90).

4. Vacuum and/or pressure filtration device according to any one of claims 1 to 3, wherein the inner jacket (40) includes a load-bearing inner support jacket (110) and an outer functional jacket (120) which is supported by the support jacket (110) and by which the inner jacket outer surface (42) is formed in a manner so as to be isolated from the support jacket (110).

5. Vacuum and/or pressure filtration device according to claim 3 and 4, wherein the support jacket (110) and the first support plate (90) are rigidly connected to each other, and wherein the support jacket (110), the first support plate (90), the outer functional plate (100) and the functional jacket (120) are arranged and configured such that the support jacket (110) and the first support plate (90) are isolated from both the recesses (66) and the inner jacket outer surface (42) .

6. Vacuum and/or pressure filtration device according to claim 3 and 4 or according to claim 5 having a drive shaft (130) extending centrally to the filter drum (12), wherein the drive shaft (130) is fixedly, optionally fixedly in a releasable manner, connected to the first support plate (90) such that a torque applied to the drive shaft (130) is transmitted from the drive shaft (130) to the filter drum (12) via the first support plate (90).

7. Vacuum and/or pressure filtration device according to claim 6, wherein the filter drum (12) includes a second drum end face-sided plate (140) which, along the drum axis (14), is arranged opposite to the first drum end face-sided plate (60), wherein the inner jacket (40) and the outer jacket (20), along the drum axis (14), extend between the two drum end face-sided plates (60, 140) and connect those to each other, and wherein the second drum end face-sided plate (140) includes a second load-bearing inner support plate (150), which is rigidly connected to the support jacket (110), and includes a cover plate (160) arranged on the second support plate (150), wherein the cover plate (160), the functional jacket (120) and the functional plate (100) are connected to each other such that they form an encapsulation with respect to the two support plates (90, 150) and the support jacket (110), by which the two support plates (90, 150) and the support jacket (110) are isolated against a touch contact with the suspension (S) present outside on the filter drum (12) during filtration operation.

8. Vacuum and/or pressure filtration device according to claim 7, wherein the drive shaft (130) is fixedly, optionally fixedly in a releasable manner, connected to the second drum end face-sided plate (140) such that a torque applied to the drive shaft (130) is transmitted from the drive shaft (130) to the filter drum (12) via the two support plates (90, 150).

9. Vacuum and/or pressure filtration device according to any one of the preceding claims provided that in combination with claims 3 and 4, wherein the functional plate (100) and the functional jacket (120) are of a different material than the first support plate (90) and the support jacket (110).

10. Vacuum and/or pressure filtration device according to claim 9, wherein the functional plate (100) and the functional jacket (120) are of a same material, and/or wherein the first support plate (90) and the support jacket (110) are of a same material.

11. Vacuum and/or pressure filtration device according to claim 9 or 10, wherein the functional plate (100) and the functional jacket (120) are of a plastic material, and/or wherein the first support plate (90) and the support jacket (110) are of a weldable metal material and are welded to each other to thereby form a load-bearing welded connection.

## Revendications

1. Dispositif de filtration sous vide et/ou sous pression (10) pour filtrer une suspension (S), laquelle comprend une matière solide et un liquide, avec un tambour filtrant (12), dans lequel le tambour filtrant
- définit un axe de tambour (14),
- est monté de manière à pouvoir tourner autour de l'axe de tambour,
- présente une enveloppe extérieure (20),
- à partir de laquelle sont réalisées une pluralité de cellules filtrantes (22),
- qui s'étendent le long de l'axe de tambour,
- qui sont disposées au voisinage les unes des autres tout autour de l'axe de tambour et
- qui sont pourvues sur leur face extérieure d'un milieu filtrant (24),
- présente une enveloppe intérieure (40),
- qui est disposée au voisinage de l'enveloppe extérieure,
- qui possède une surface extérieure d'enveloppe intérieure (42), laquelle
- délimite les cellules filtrantes radialement à l'intérieur, de sorte
- qu'une pluralité de surfaces d'écoulement (44) sont formées par la surface extérieure d'enveloppe intérieure,
- sur lesquelles le liquide, qui passe à travers le milieu filtrant respectif lors de la filtration de la suspension, peut s'écouler en tant que filtrat, et
- qui est réalisée de manière amincie de façon conique au moins en direction d'une première face frontale de tambour
(50) du tambour filtrant le long de l'axe de tambour, de sorte que la surface d'écoulement respective s'étend de manière inclinée radialement vers l'intérieur de manière correspondante au moins en direction de la première face frontale de tambour du tambour filtrant, et
- présente une première plaque côté frontal de tambour (60),
- dans laquelle est réalisée une pluralité de canaux d'évacuation (62) respectivement associées aux cellules filtrantes pour évacuer le filtrat, dans lequel la surface d'écoulement respective est en liaison fluidique avec le canal d'évacuation associé,
- dans lequel la première plaque côté frontal de tambour est pourvue d'une pluralité d'évidements (66) le long de sa périphérie extérieure,
- qui sont respectivement associés aux canaux d'évacuation et
- qui forment une arrivée (68) du canal d'évacuation respectivement associé,
- dans laquelle débouche la surface d'écoulement respectivement associée et
- qui est réalisée de manière amincie en direction du canal d'évacuation, de sorte que le canal d'évacuation respectif est raccordé à l'évidement associé en son point radialement le plus à l'intérieur (70) .

2. Dispositif de filtration sous vide et/ou sous pression selon la revendication 1, dans lequel, vu en direction de l'axe de tambour, le point radialement le plus à l'intérieur (70) de chaque évidement (66) est disposé de manière décalée par rapport à un centre périphérique (72) d'une partie périphérique extérieure (74) de la cellule filtrante (22) respective dans un sens de rotation du tambour filtrant (12).

3. Dispositif de filtration sous vide et/ou sous pression selon la revendication 1 ou 2, dans lequel la première plaque côté frontal de tambour (60) présente une première plaque d'appui (90) intérieure supportant la charge et une plaque fonctionnelle extérieure (100), laquelle est soutenue par la première plaque d'appui (90) et dans laquelle les canaux d'évacuation (62) et les évidements (66) sont réalisés de manière isolée de la première plaque d'appui (90).

4. Dispositif de filtration sous vide et/ou sous pression selon l'une quelconque des revendications 1 à 3, dans lequel l'enveloppe intérieure (40) présente une enveloppe d'appui (110) intérieure supportant la charge et une enveloppe fonctionnelle (120) extérieure, laquelle est soutenue par l'enveloppe d'appui (110) et par laquelle la surface extérieure d'enveloppe intérieure (42) est formée d'une manière isolée de l'enveloppe d'appui (110).

5. Dispositif de filtration sous vide et/ou sous pression selon les revendications 3 et 4, dans lequel l'enveloppe d'appui (110) et la première plaque d'appui (90) sont reliées rigidement l'une à l'autre, et dans lequel l'enveloppe d'appui (110), la première plaque d'appui (90), la plaque fonctionnelle extérieure (100) et l'enveloppe fonctionnelle (120) sont disposées et conçues de telle sorte que l'enveloppe d'appui (110) et la première plaque d'appui (90) sont isolées aussi bien des évidements (66) que de la surface extérieure d'enveloppe intérieure (42).

6. Dispositif de filtration sous vide et/ou sous pression selon les revendications 3 et 4 ou selon la revendication 5, avec un arbre d'entraînement (130), qui s'étend de manière centrale par rapport au tambour filtrant (12), dans lequel l'arbre d'entraînement (130) est relié fixement, éventuellement de manière détachable, à la première plaque d'appui (90), de sorte qu'un couple appliqué à l'arbre d'entraînement (130) est transmis de l'arbre d'entraînement (130) au tambour filtrant (12) par l'intermédiaire de la première plaque d'appui (90).

7. Dispositif de filtration sous vide et/ou sous pression selon la revendication 6, dans lequel le tambour filtrant (12) présente une deuxième plaque côté frontal de tambour (140), qui est disposée à l'opposé de la première plaque côté frontal de tambour (60) le long de l'axe de tambour (14), dans lequel l'enveloppe intérieure (40) et l'enveloppe extérieure (20) s'étendent le long de l'axe de tambour (14) entre les deux plaques (60, 140) côté frontal de tambour et relient celles-ci l'une à l'autre, et dans lequel la deuxième plaque côté frontal de tambour (140) présente une deuxième plaque d'appui (150) intérieure supportant la charge, laquelle est reliée rigidement à l'enveloppe d'appui (110), et une plaque de revêtement (160) disposée sur la deuxième plaque d'appui (150), dans lequel la plaque de revêtement (160), l'enveloppe fonctionnelle (120) et la plaque fonctionnelle (100) sont reliées les unes aux autres de telle sorte qu'elles forment par rapport aux deux plaques d'appui (90, 150) et à l'enveloppe d'appui (110) une encapsulation, par laquelle les deux plaques d'appui (90, 150) et l'enveloppe d'appui (110) sont isolées vis-à-vis d'un contact avec la suspension (S) présente dans le mode filtration à l'extérieur sur le tambour filtrant (12).

8. Dispositif de filtration sous vide et/ou sous pression selon la revendication 7, dans lequel l'arbre d'entraînement (130) est relié fixement, éventuellement de manière détachable, à la deuxième plaque côté frontal de tambour (140), de sorte qu'un couple appliqué à l'arbre d'entraînement (130) est transmis de l'arbre d'entraînement (130) au tambour filtrant (12) par l'intermédiaire des deux plaques d'appui (90, 150).

9. Dispositif de filtration sous vide et/ou sous pression selon l'une quelconque des revendications précédentes prise en combinaison avec les revendications 3 et 4, dans lequel la plaque fonctionnelle (100) et l'enveloppe fonctionnelle (120) sont composées d'un autre matériau que la première plaque d'appui (90) et l'enveloppe d'appui (110).

10. Dispositif de filtration sous vide et/ou sous pression selon la revendication 9, dans lequel la plaque fonctionnelle (100) et l'enveloppe fonctionnelle (120) sont composées d'un même matériau, et/ou dans lequel la première plaque d'appui (90) et l'enveloppe d'appui (110) sont composées d'un même matériau.

11. Dispositif de filtration sous vide et/ou sous pression selon la revendication 9 ou 10, dans lequel la plaque fonctionnelle (100) et l'enveloppe fonctionnelle (120) sont composées d'une matière plastique, et/ou dans lequel la première plaque d'appui (90) et l'enveloppe d'appui (110) sont composées d'un matériau métallique soudable et sont soudées l'une à l'autre pour former une liaison soudée supportant la charge.
